(19) Europäisches Patentamt
European Patent Office
Office européen des brevets

(11) **EP 1 845 011 B1**

(12) **EUROPÄISCHE PATENTSCHRIFT**

(45) Veröffentlichungstag und Bekanntmachung des
Hinweises auf die Patenterteilung:
**15.08.2012 Patentblatt 2012/33**

(51) Int Cl.:
***B60W 40/10*** *(2012.01)*       ***B62D 6/00*** *(2006.01)*

(21) Anmeldenummer: **07102901.1**

(22) Anmeldetag: **22.02.2007**

(54) **Verfahren zum Optimieren eines Einspurmodells**

Method for optimising a single track model

Procédé destiné à l'optimisation d'un modèle à une voie

(84) Benannte Vertragsstaaten:
**DE FR GB**

(30) Priorität: **10.04.2006 DE 102006016769**

(43) Veröffentlichungstag der Anmeldung:
**17.10.2007 Patentblatt 2007/42**

(73) Patentinhaber: **Ford Global Technologies, LLC
Dearborn, MI 48126 (US)**

(72) Erfinder:
• **Arndt, Cristoph
57583, Moerlen (DE)**
• **Lakehal-ayat, Mohsen
52072, Aachen (DE)**
• **Karidas, Johannes
52070, Aachen (DE)**

(74) Vertreter: **Drömer, Hans-Carsten
Ford-Werke Aktiengesellschaft
Patentabteilung NH/DRP
Henry-Ford-Strasse 1
50725 Köln (DE)**

(56) Entgegenhaltungen:
WO-A-99/58381      WO-A-02/053426
WO-A-2004/101336   DE-A1- 10 212 582
DE-A1- 19 919 180

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**EP 1 845 011 B1**

**Beschreibung**

Die Erfindung betrifft ein Verfahren zum Optimieren eines Einspurmodells für ein Kraftfahrzeug sowie eine Steuerungsvorrichtung für ein Kraftfahrzeug, welche eine zur Ausführung des Verfahrens eingerichtete Schätzeinrichtung enthält.

Ein Einspurmodell ist das Resultat des Vereinfachens der zwei Vorderräder und der zwei Hinterräder zu einem Vorder- und einem Hinterrad. Die meisten Parameter eines Einspurmodells werden im allgemeinen durch Messen der Geometrie des Kraftfahrzeuges und durch Bewerten der Trägheitsmomente mit Hilfe von CAE-Modellen (CAE: Computer-Aided Engineering) erhalten. Das Einspurmodell wird normalerweise als eine Basis für eine Abschätzung des Kraftfahrzeugzustands, für Steueranwendungen oder Fahrerbewertungsmodelle verwendet, obwohl Reifenmodelle im allgemeinen sehr komplex sind und Effekte beinhalten, die nicht mit einem Einspurmodell erfasst werden können.

Der Reifen ist die primäre Schnittstelle zwischen dem Kraftfahrzeug und der Umgebung. Insbesondere die Abschätzung bestimmter Zustände, wie beispielsweise die Lateralgeschwindigkeit, erfordern Informationen bezüglich des Reifens. Da ein Einspurmodell üblicherweise von dem Reifenmodell abhängt, ist es wichtig, dass das Einspurmodell richtig optimiert bzw. getunt ist. Das korrekte Tuning wird normalerweise mit Hilfe von CAE-Modellen erreicht und auf das Fahrzeug mit kleineren Veränderungen transferiert. Für Veränderungen bei den Reifen (Sommer-, Winterreifen, verschiedener Druck, verschiedene Reifentypen usw.) stellen die CAE-Daten nicht genug Informationen bereit.

DE 199 19 180 A1 beschreibt eine Regelschaltung zum Regeln der Fahrstabilität eines Fahrzeuges. Die Fahrdynamikregelung umfasst eine Optimierung des Fahrzeugmodells, das ein Einspurmodell nach dem Oberbegriff des Anspruchs 1 sein kann, anhand einer Vielzahl von Parametern. Auf der Basis der Parameter, die auch die Abweichung der gemessenen Giergeschwindigkeit von der Modellgiergeschwindigkeit und die Abweichung der gemessenen Gierbeschleunigung von der Modellgierbeschleunigung umfassen, werden die Parameter Eigenlenkgradient, Gierträgheitsmoment, Reifensteifigkeit des Vorderrades sowie Reifensteifigkeit des Hinterrades optimiert.

DE 102 12 582 A1 beschreibt ein Verfahren und eine Vorrichtung zur Regelung der Fahrdynamik. Auf die Räder wirkende Kräfte werden dabei unter Verwendung der Schräglaufsteifigkeit berechnet. Das Abschätzen der Steifigkeit aus Messdaten ist nicht beschrieben.

WO 02/053426 A1 beschreibt ein System und ein Verfahren zur Überwachung des Fahrverhaltens eines Kraftfahrzeuges. In diesem Verfahren werden die Reifenlängssteifigkeiten eines Fahrzeugmodells, beispielsweise eines Einspurmodells, optimiert. Hierzu werden die Deformation von Rädern sowie die Raddrehzahlen erfasst. Die Gierbeschleunigung findet zum Optimieren der Reifensteifigkeiten nicht Verwendung.

WO 2004/101336 beschreibt das Optimieren einer Fahrdynamikregelung unter Verwendung von Reifeninformationen. Insbesondere beschreibt D1 das Bestimmen der freien Rollgeschwindigkeit unter Verwendung der Längssteifigkeit des Reifens, das Bestimmen der Reifenquerkraft unter Verwendung der Längssteifigkeit und der Quersteifigkeit des Reifens sowie das Bestimmen der Sollgiergeschwindigkeit unter Verwendung der Quersteifigkeit des Fahrzeugs an der Vorder- und Hinterachse.

WO 99/58381 beschreibt ein Verfahren zum Regeln der Fahrstabilität eines Fahrzeugs. Das Regelverfahren wird in Abhängigkeit eines K-Wertes von wenigstens einem Reifen des Fahrzeuges durchgeführt.

Vor diesem Hintergrund ist es die Aufgabe der vorliegenden Erfindung, Mittel für ein zuverlässiges und gleichzeitig schnelles Optimieren eines Einspurmodells bereitzustellen.

Diese Aufgabe wird durch ein Verfahren mit den Merkmalen des Anspruchs 1 sowie durch eine Steuerungsvorrichtung mit den Merkmalen des Anspruchs 10 gelöst. Vorteilhafte Ausgestaltungen sind in den Unteransprüchen enthalten.

Gemäß einem ersten Aspekt betrifft die Erfindung ein Verfahren zum Optimieren eines Einspurmodells. Die Optimierung wird durch Erhalten der realen Reifensteifigkeit aus einer Abschätzung in dem realen Fahrzeug erreicht, die online durchgeführt werden kann. Das Abschätzen der Reifensteifigkeit erfolgt dabei wenigstens auf der Basis der Gierbeschleunigung. Die in einem Fahrzeug integrierten Steuerungsvorrichtungen benötigen präzise Informationen über den Fahrzeugzustand, welche durch eine verbesserte Abschätzung der Fahrzeugparameter genauer ermittelt werden können. Einer der wichtigsten Parameter hiervon ist die Reifensteifigkeit für Vorder- und Hinterreifen. Durch die Abschätzung der Reifensteifigkeit kann ein Einspurmodell korrekt getunt bzw. optimiert werden.

Die Abschätzung der Reifensteifigkeit kann weiterhin wenigstens auf dem gemessenen Radwinkel und/oder der gemessenen Längsgeschwindigkeit basieren. Weiterhin kann wenigstens der Abstand zwischen Vorder- bzw. Hinterachse und Massenzentrum des Kraftfahrzeuges zur Abschätzung der Reifensteifigkeit herangezogen werden. Der Radwinkel, die Längsgeschwindigkeit und die Gierrate sind meßbare Größen, während der Abstand zwischen Vorder- bzw. Hinterachse und Massenzentrum des Kraftfahrzeuges ein Parameter ist. Die vorstehenden Größen sind somit allesamt Werte, die entweder leicht messbar oder von vornherein festgelegt sind.

In einer besonders vorteilhaften Ausführungsform der Erfindung wird die Reifensteifigkeit des Vorder- bzw. Hinterrads wenigstens auf Basis des Abstands zwischen der Vorder- bzw. Hinterachse und dem Massenzentrum des Fahrzeuges, des Massenträgheitsmoments des Fahrzeugs, der Masse des Fahrzeugs, des Radwinkels, der Gierrate, der Längsgeschwindigkeit und der Lateralgeschwindigkeit geschätzt. Alle vorstehenden Parameter sind entweder durch das Fahrzeug selbst festgelegt oder leicht mittels Sensoren an dem Fahrzeug messbar. Durch Messen des Radwinkels, der Gierrate, der Längsgeschwindigkeit, der Lateralgeschwindigkeit sowie durch die Kenntnis des Abstandes des Vorder- bzw. Hinterrades zu dem Massenzentrum, des Trägheitsmomentes und der Masse des Fahrzeugs lässt sich folglich die Reifensteifigkeit des Vorder- bzw. Hinterreifens leicht abschätzen. Durch das erfindungsgemäße Verfahren wird eine aktuelle, präzise und leicht durchführbare Schätzung der Reifensteifigkeit ermöglicht.

Vorteilhaft werden der Radwinkel, die Gierrate, die Längsgeschwindigkeit und die Lateralgeschwindigkeit im Rahmen der Schätzung jeweils konstant gehalten.

In einer vorteilhaften Ausführungsform der Erfindung beinhaltet die Abschätzung die Durchführung eines rekursiven Algorithmus nach der Methode der kleinsten Quadrate. Hierdurch können leicht Faktoren, die zur Abschätzung der Reifensteifigkeit benötigt werden, auf Basis von Größen, die an dem Fahrzeug gemessen werden, wie beispielsweise die Lateralgeschwindigkeit, der Radwinkel usw., berechnet werden. Insbesondere kann die Reifensteifigkeit wenigstens auf der Basis der Gierbeschleunigung, der Lateralbeschleunigung, des Radwinkels, der Gierrate, der Längsgeschwindigkeit, des Abstandes zwischen Vorder- oder Hinterachse und Massenzentrum des Fahrzeugs und des Trägheitsmoments des Fahrzeugs mittels eines rekursiven Algorithmus nach der Methode der kleinsten Quadrate leicht abgeschätzt werden. Weiterhin wird eine Division durch Null vermieden.

Vorteilhaft wird das Verfahren gemäß der vorliegenden Erfindung online durchgeführt. Hierdurch wird einerseits eine ständige Anpassung der Werte durch stetige Optimierung des Schätzalgorithmus ermöglicht, andererseits wird dadurch eine schnellere Reaktion des Steuerungssystems eines Fahrzeuges ermöglicht.

Vorteilhaft wird die abgeschätzte Reifensteifigkeit zur Anpassung von Modellen für neue Reifensätze verwendet.

Die Erfindung betrifft weiterhin eine Steuerungsvorrichtung für Kraftfahrzeuge, welche eine Schätzeinrichtung (Estimator) enthält, die dahingehend ausgebildet ist, ein Verfahren der vorstehend beschriebenen Art durchzuführen. Das heißt, die Schätzeinrichtung ist in der Lage, die Reifensteifigkeit des Vorder- bzw. des Hinterrades abzuschätzen. Die Schätzeinheit kann als Hardware- oder als Softwaremodul ausgeführt sein. Die Steuerungsvorrichtung ist für zahlreiche Anwendungen im Rahmen der Kontrolle und Überwachung eines Kraftfahrzeuges verwendbar.

Im folgenden wird die Erfindung mit Hilfe der beigefügten Figuren beispielhaft erläutert. Es zeigen:

Fig. 1 eine schematische Zeichnung einer Schätzeinheit der erfindungsgemäßen Steuervorrichtung, die zur Durchführung des erfindungsgemäßen Verfahren geeignet ist;

Fig. 2 eine schematische Zeichnung eines Einspurmodells, das mit dem erfindungsgemäßen Verfahren optimiert bzw. getunt werden kann; und

Fig. 3 eine schematische Zeichnung einer Implementierung des erfindungsgemäßen Verfahrens.

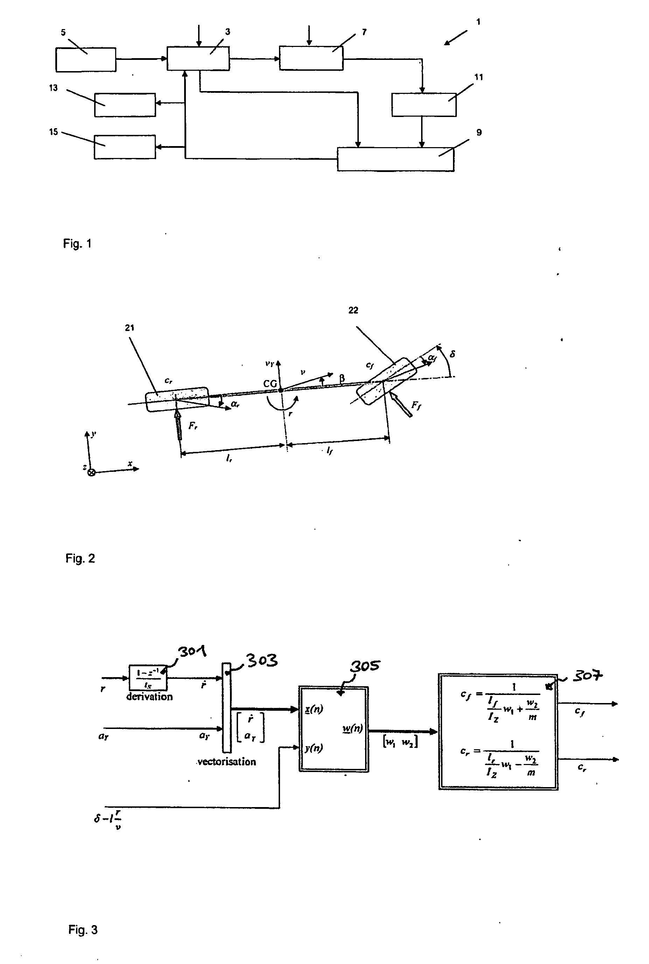

In Fig. 1 ist schematisch die erfindungsgemäße Schätzeinheit 1 gezeigt. Die Schätzeinheit 1 umfasst das Einspurmodellmodul 3, das mit einem Fahrermodul 5 verbunden ist und Ausgangsgrößen, bspw. den Radwinkel repräsentierende Ausgangsgrößen, von ihm erhält. Das Einspurmodellmodul 3 ist weiterhin mit dem Modellmodul 7 für die vertikale Fahrdynamik verbunden, das zusätzlich zu den Ausgangsgrößen des Einspurmodellmoduls 3, wie bspw. den lateralen/longitudinalen Schlupf, weitere Werte aus der Umgebung als Eingangsgrößen erhält. Das Modellmodul 7 für die vertikale Fahrdynamik ist weiterhin mit einem Radaufhängungsmodellmodul 11 verbunden, das die Ausgangswerte des Modellmoduls 7 für die vertikale Fahrdynamik zum Berechnen der auf den Reifen wirkenden Vertikalkräfte empfängt. Das Radaufhängungsmodellmodul 11 und das Einspurmodellmodul 3 sind weiterhin mit dem Reifenmodellmodul 9 verbunden, das aus den Ausgangswerten dieser beiden Module, d.h. auf Basis des lateralen/longitudinalen Schlupfes und der Vertikalkräfte die Reifensteifigkeit abschätzt. Aus dem Reifenmodellmodul 9 ausgegebene Schätzwerte für die longitudinalen und lateralen Reifenkräfte können an die Modusdetektionseinrichtung 13 und an die Störgrößenschätzeinrichtung 15 ausgegeben werden, die mit dem Reifenmodellmodul 9 verbunden sind und zur Optimierung des Fahrzeugsystems dienen.

Das Einspurmodellmodul 3 führt Berechnungen bzw. Abschätzungen anhand von Werten aus, die es aus der Umgebung und von dem Fahrermodul 5 erhält. Eine Eingangsgröße des Fahrermoduls 5 ist beispielsweise der Radwinkel, während eine Eingangsgröße aus der Umgebung beispielsweise der Straßenzustand oder -belag ist. Die von dem Einspurmodellmodul 3 berechneten bzw. abgeschätzten Ausgangswerte werden einerseits an das Modellmodul 7 für die vertikale Fahrdynamik und andererseits an das Reifenmodellmodul 9 ausgegeben. Die von dem Modellmodul 7 für die vertikale Fahrdynamik eingegebenen Werte werden noch mit weiteren Umgebungswerten beaufschlagt und der Hub der Radaufhängung wird an das Radaufhängungsmodellmodul 11 ausgegeben. In dem Radaufhängungsmodellmodul 11 werden dann daraus die Vertikalkräfte des Fahrzeugs ermittelt. Mit dem Radaufhängungsmodellmodul 11 verbunden ist das Reifenmodellmodul 9, in dem Werte für die Reifensteifigkeit auf der Basis der Ausgangwerte des Radaufhängungsmodellmoduls 11, d.h., der auf den Reifen einwirkenden Vertikalkraft, und der Ausgangswerte des Einspurmodellmoduls 3, d.h., des lateralen/longitudinalen Schlupfes, abgeschätzt werden. Die von dem Reifenmodellmodul 9 abgeschätzten Parameter werden u. a. an das Einspurmodellmodul 3 ausgegeben, um diesem verbesserte, d.h. optimierte, Parameter bereitzustellen. Weiterhin gibt das Reifenmodellmodul 9 die abgeschätzten Werte an die Modusdetektionseinrichtung 13 und an die Störgrößenschätzeinrichtung 15 aus, damit diese Einrichtungen auf aktuelle Werte Bezug nehmen können.

Durch Einbeziehung von Messwerten, die an dem Fahrzeug mittels Sensoren gemessen werden können, kann die Schätzeinheit 1 fortwährend an die Fahrzeugbedingungen sowie an den momentanen Fahrzeugzustand angepasst werden und somit optimiert werden.

Fig. 2 zeigt eine schematische Zeichnung eines Einspurmodells, das entsprechend der vorliegenden Erfindung verwendet werden kann. Das Einspurmodell ist das Resultat der Vereinfachung der zwei Vorderräder und der zwei Hinterräder auf ein Vorderrad 22 und ein Hinterrad 21. Nick-, Roll- und Hub-Bewegungen werden vernachlässigt. Der Schwerpunkt CG ist auf Null gelegt. Die Fahrereingangsgröße ist der Radwinkel ($\delta$). Es wird angenommen, dass die Längsgeschwindigkeit eine konstante oder eine sich wenig verändernde Variable ist.

Wie in der Figur 2 gezeigt ist, wirkt die Reifenkraft $F_r$ auf das Hinterrad 21, und wirkt die Reifenkraft $F_f$ auf das Vorderrad 22. Der Abstand $l_r$ ist der Abstand des Hinterrads 21 zu dem Massenschwerpunkt CG des Fahrzeugs, während der Abstand $l_f$ der Abstand des Vorderrads 22 zu dem Massenschwerpunkt CG des Fahrzeugs ist. Der Schräglaufwinkel $\alpha_f$ gibt den Winkel zwischen der Radachse des Vorderrades 22 und dem Ausschlag des Vorderrades 22 an, während der Schräglaufwinkel $\alpha_r$ den Winkel zwischen der Radachse des Hinterrades 21 und dem Ausschlag des Hinterrades 21 angibt. Weitere Einflussparameter in dem Einspurmodell sind die Reifensteifigkeit $c_r$ des Hinterrades 21, und die Reifensteifigkeit $c_f$ des Vorderrades 22. Weitere Einflussgrößen in dem Einspurmodell sind die Gierrate r, die Längsgeschwindigkeit $v$ sowie die Lateralgeschwindigkeit $v_Y$. Weiterhin ist schematisch das Koordinatensystem x,y,z gezeigt.

Die Schräglaufwinkel von Vorderrad 22 bzw. Hinterrad 21 können bei diesem Einspurmodell aus geometrischen Gleichungen berechnet werden, wobei der Vorderschräglaufwinkel $\alpha_f$

$$\alpha_f = \delta - \frac{l_f r + v_Y}{v} \text{ ist,}$$

ist,
wobei $\delta$ der Radwinkel ist, $l_f$ der Abstand der Vorradachse zu dem Massenzentrum des Fahrzeuges ist, r die Gierrate ist, $v_Y$ die Lateralgeschwindigkeit ist, $v$ die Längsgeschwindigkeit ist, und wobei der Hinterschräglaufwinkel $\alpha_r$

$$\alpha_r = \delta - \frac{l_r r + v_Y}{v}$$

ist, wobei $l_r$ der Abstand der Hinterradachse zu dem Massenzentrum des Fahrzeuges ist, und die weiteren Größen wie vorstehend definiert sind.

In Matrixform lauten die beiden vorstehenden Gleichungen wie folgt:

$$\begin{bmatrix} \alpha_f \\ \alpha_r \end{bmatrix} = \begin{bmatrix} -\dfrac{1}{v} & -\dfrac{l_f}{v} \\ -\dfrac{1}{v} & \dfrac{l_r}{v} \end{bmatrix} \begin{bmatrix} v_Y \\ r \end{bmatrix} + \begin{bmatrix} 1 \\ 0 \end{bmatrix} \delta$$

Die Differenz von Vorderschräglaufwinkel und Hinterschräglaufwinkel ist dann:

$$\alpha_f - \alpha_r = \delta - l \frac{r}{v} \qquad\qquad \text{(Gleichung 1),}$$

wobei I der Abstand zwischen Vorder- und Hinterachse des Fahrzeugs ist und die weiteren Größen wie vorstehend definiert sind.

Diese Differenz ist von der Lateralgeschwindigkeit unabhängig. Der Radwinkel, die Längsgeschwindigkeit und die Gierrate sind mittels Fahrzeugsensoren messbar, und der Abstand I zwischen Vorder- bzw. Hinterachse des Fahrzeuges ist ein fester Parameter.

Drehbewegungen des Fahrzeugschwerpunktes führen jedoch zu einer Änderung der Lateralgeschwindigkeit:

$$\dot{v}_Y = a_Y - rv \ ,$$

wobei $\dot{v}_Y$ die Ableitung der Lateralgeschwindigkeit ist, $a_Y$ die Lateralbeschleunigung ist, $r$ und $v$ wie vorstehend definiert sind.

Die Gierbeschleunigung wird durch das Gierdrehmoment erzeugt, die Lateralbeschleunigung durch die Summe der Lateralkräfte. Das dynamische Modell wird dann:

$$\begin{bmatrix} \dot{r} \\ a_Y \end{bmatrix} = \begin{bmatrix} \dfrac{l_f}{I_z} & \dfrac{-l_r}{I_z} \\ \dfrac{1}{m} & \dfrac{1}{m} \end{bmatrix} \begin{bmatrix} F_f \\ F_r \end{bmatrix} \Leftrightarrow \begin{bmatrix} F_f \\ F_r \end{bmatrix} = \begin{bmatrix} \dfrac{I_z}{l} & m\dfrac{l_r}{l} \\ -\dfrac{I_z}{l} & m\dfrac{l_f}{l} \end{bmatrix} \begin{bmatrix} \dot{r} \\ a_Y \end{bmatrix} \ ,$$

wobei $F_f$ die Lateralkraft ist, die auf den Vorderreifen wirkt, $F_r$ die Lateralkraft ist, die auf den Hinterreifen wirkt, $I_z$ das Trägheitsmoment des Fahrzeugs ist, $m$ die Masse des Fahrzeugs ist und die weiteren Größen wie vorstehend definiert sind.

Aus der vorstehenden Gleichung können die Lateralreifenkräfte berechnet werden:

$$F_f = \frac{I_z}{l}\dot{r} + \frac{ml_r}{l}a_Y \qquad \text{(Gleichung 2)},$$

und

$$F_r = \frac{I_z}{l}\dot{r} + \frac{ml_f}{l}a_Y \qquad \text{(Gleichung 3)}$$

wobei die Größen wie vorstehend definiert sind.

Die Lateralkräfte sind das Resultat der Schräglaufwinkel und der Reifensteifigkeit:

$$F_f = c_f\alpha_f \qquad\qquad \text{bzw.} \qquad F_r = c_r\alpha_r,$$

wobei $c_f$ die Reifensteifigkeit des Vorderrads ist, $c_r$ die Reifensteifigkeit des Hinterrads ist und die Größen wie vorstehend definiert sind.

Die Differenz der Schräglaufwinkel kann anhand folgender Gleichung

$$\alpha_f - \alpha_r = \frac{F_f}{c_f} - \frac{F_r}{c_r} \qquad \text{(Gleichung 4)}$$

berechnet werden, wobei die Größen wie vorstehend definiert sind.

Durch Einsetzen der Gleichungen 1, 2, und 3 in Gleichung 4 erhält man:

$$\delta - l\frac{r}{v} = \frac{1}{c_f}\left(\frac{I_z}{l}\dot{r} + \frac{ml_r}{l}a_Y\right) - \frac{1}{c_r}\left(-\frac{I_z}{l}\dot{r} + \frac{ml_f}{l}a_Y\right) = \frac{I_z}{l}\left(\frac{1}{c_f} + \frac{1}{c_r}\right)\dot{r} + \frac{m}{l}\left(\frac{l_r}{c_f} - \frac{l_f}{c_r}\right)a_Y$$

wobei als Abkürzungen $w_1$ und $w_2$ eingeführt werden, so dass

$$\delta - l\frac{r}{v} = w_1\dot{r} + w_2 a_Y = \begin{bmatrix} w_1 w_2 \end{bmatrix}\begin{bmatrix} \dot{r} \\ a_Y \end{bmatrix},$$

wobei

$$w_1 = \frac{I_z}{l}\left(\frac{1}{c_f} + \frac{1}{c_r}\right) \qquad \text{(Gleichung 5),}$$

und

$$w_2 = \frac{m}{l}\left(\frac{l_r}{c_f} - \frac{l_f}{c_r}\right)$$

und wobei alle Größen wie vorstehend definiert sind.

Aus den beiden vorstehenden Gleichungen 5 und 6 kann insbesondere unter der Annahme, dass alle Werte der vorstehenden Größen annähernd konstant sind, die Reifensteifigkeit des Vorder- und Hinterreifens abgeschätzt werden, da sie die einzigen beiden Unbekannten sind. Zur Abschätzung der Reifensteifigkeit müssen lediglich die Gierrate, Fahrzeuggeschwindigkeit und Radwinkel meßtechnisch erfaßt werden, die beispielsweise mittels entsprechender Sensoren detektiert und an die Steuerungsvorrichtung ausgegeben werden, die die Schätzeinheit umfasst. Alle weiteren Eingangsgrößen, die der Schätzeinheit zugeführt werden, sind feststehende Fahrzeugparameter.

Fig. 3 zeigt eine schematische Zeichnung einer Implementierung des erfindungsgemäßen Verfahrens. Das erfindungsgemäße Verfahren wird von der Differenziereinheit 301, der Vektorisierungseinheit 303, der Rekursionseinheit 305 und der Schätzeinheit 307 ausgeführt. Die vorstehenden können Schaltungen oder Softwaremodule sein.

Die Eingangsgröße Gierrate r wird in der Differenziereinheit 301 entsprechend $\frac{1-z^{-1}}{t_s}$ abgeleitet. Diese Ableitung der Gierrate, d. h., die

Gierbeschleunigung, $\dot{r}$ wird an die Vektorisierungseinheit 303 ausgegeben, in die auch die Lateralbeschleunigung $a_Y$ eingegeben wird. In der Vektorisierungseinheit 303 wird aus der Ableitung der Gierrate r und der Lateralbeschleunigung $a_Y$ ein Vektor gebildet. Der erhaltene Vektor wird in Rekursionseinheit 305 zusammen mit der Eingangsgröße $\delta - l\frac{r}{v}$ einem rekursiven Algorithmus nach der Methode der kleinsten Quadrate unterzogen:

$$y(n) = \underline{w}(n)\underline{x}(n),$$

wobei hier die Gleichung $\delta - l\dfrac{r}{v} = \begin{bmatrix} w_1 & w_2 \end{bmatrix} \begin{bmatrix} \dot{r} \\ a_y \end{bmatrix}$ auf der Basis der Eingangsgrößen gelöst wird. Die derart abgeschätzte Ausgangsgröße $[w_1 w_2]$ wird in die Schätzeinheit 307 eingegeben. In der Schätzeinheit 307 werden die Reifensteifigkeiten des Vorder- und Hinterreifens entsprechend den folgenden Gleichungen abgeschätzt:

$$c_f = \frac{1}{\dfrac{l_f}{I_z}w_1 + \dfrac{w_2}{m}} \quad \text{bzw.} \quad c_r = \frac{1}{\dfrac{l_r}{I_z}w_1 + \dfrac{w_2}{m}} \,,$$

wobei $c_f$ bzw. $c_r$ die Reifensteifigkeit des Vorder- bzw. Hinterreifens ist, $l_f$ bzw. $l_r$ der Abstand zwischen der Vorder- bzw. Hinterachse und dem Massenzentrum des Fahrzeuges ist, $I_z$ das Trägheitsmoment des Fahrzeugs ist, und m die Masse des Fahrzeugs ist. Die Größen $l_f$, $l_r$, $I_z$ und m sind Fahrzeugparameter, die als invariable Eingangsgrößen in die Schaltung 307 eingegeben werden.

**Patentansprüche**

1. Verfahren zum Optimieren eines Einspurmodells in einer Steuerungsvorrichtung für Kraftfahrzeuge, in dem für das Optimieren eine Abschätzung der Reifensteifigkeit herangezogen wird, **dadurch gekennzeichnet, dass** die Reifensteifigkeit wenigstens auf der Basis der Gierbeschleunigung abgeschätzt wird.

2. Verfahren nach Anspruch 1, **dadurch gekennzeichnet, dass** die Reifensteifigkeit wenigstens auf der Basis der Gierbeschleunigung, der Lateralbeschleunigung, des Radwinkels, der Gierrate, der Längsgeschwindigkeit, des Abstandes zwischen Vorder- oder Hinterachse und Massenzentrum des Fahrzeugs, der Masse des Fahrzeugs und des Trägheitsmoments des Fahrzeugs mittels eines rekursiven Algorithmus nach der Methode der kleinsten Quadrate abgeschätzt wird.

3. Verfahren nach einem der Ansprüche 1 bis 2, **dadurch gekennzeichnet, dass** es online durchgeführt wird.

4. Verfahren nach einem der Ansprüche 1 bis 3, **dadurch gekennzeichnet, dass** weiterhin eine Anpassung von Modellen für neue Reifensätze mittels der abgeschätzten Reifensteifigkeit durchgeführt wird.

5. Steuerungsvorrichtung für ein Kraftfahrzeug, enthaltend eine Schätzeinrichtung (1), welche dahingehend ausgebildet ist, ein Verfahren nach mindestens einem der Ansprüche 1 bis 4 durchzuführen.

6. Steuerungsvorrichtung nach Anspruch 5, **dadurch gekennzeichnet, dass** diese dahingehend ausgebildet ist, eine elektronische Fahrzeugstabilisierung durchzuführen.

7. Steuerungsvorrichtung nach Anspruch 5, **dadurch gekennzeichnet, dass** diese dahingehend ausgebildet ist, Modelle für neue Reifensätze anzupassen.

**Claims**

1. Method for optimizing a single track model in a control device for motor vehicles, in which an estimate of the rigidity of a tire is used for the optimization, **characterized in that** the rigidity of the tire is estimated at least on the basis of the yaw acceleration.

2. Method according to Claim 1, **characterized in that** the rigidity of the tire is estimated by means of a recursive algorithm using the least-squares method at least on the basis of the yaw acceleration, the lateral acceleration, the wheel angle, the yaw rate, the longitudinal velocity, the distance between the front axle or rear axle and the center of mass of the vehicle, the mass of the vehicle and the moment of mass inertia of the vehicle.

**3.** Method according to one of Claims 1 to 2, **characterized in that** it is carried out online.

**4.** Method according to one of Claims 1 to 3, **characterized in that** furthermore models for new sets of tires are adapted by means of the estimated rigidity of a tire.

**5.** Control device for a motor vehicle, containing an estimation device (1) which is designed to carry out a method according to at least one of Claims 1 to 4.

**6.** Control device according to Claim 5, **characterized in that** said device is designed to carry out an electronic vehicle stabilization process.

**7.** Control device according to Claim 5, **characterized in that** it is designed to adapt models for new sets of tires.

**Revendications**

**1.** Procédé d'optimisation d'un modèle de traçage de voie dans un dispositif de commande pour véhicules automobiles dans lequel l'optimisation est déduite d'une estimation de la rigidité d'un pneumatique, **caractérisé en ce que** la rigidité du pneumatique est estimée au moins sur la base de l'accélération de lacet.

**2.** Procédé selon la revendication 1, **caractérisé en ce que** la rigidité du pneumatique est estimée au moins sur la base de l'accélération de lacet, de l'accélération latérale, de l'angle de roue, de la vitesse de lacet, de la vitesse longitudinale, de la distance entre l'essieu avant ou arrière et le centre massique du véhicule, de la masse du véhicule et du couple d'inertie du véhicule, à l'aide d'un algorithme récurrent selon la méthode des plus petits carrés.

**3.** Procédé selon l'une quelconque des revendications 1 et 2, **caractérisé en ce qu'**il est mis en oeuvre en ligne.

**4.** Procédé selon l'une quelconque des revendications 1 à 3, **caractérisé en ce qu'**une adaptation des modèles de nouveaux jeux de pneumatiques est en outre mise en oeuvre par le biais de la rigidité estimée du pneumatique.

**5.** Dispositif de commande pour un véhicule automobile, contenant un dispositif d'évaluation (1) réalisé pour mettre en oeuvre un procédé selon au l'une quelconque des revendications 1 à 4.

**6.** Dispositif de commande selon la revendication 5, **caractérisé en ce qu'**il est réalisé pour mettre en oeuvre une stabilisation électronique du véhicule.

**7.** Dispositif de commande selon la revendication 5, **caractérisé en ce qu'**il est réalisé pour adapter des modèles de nouveaux jeux de pneumatiques.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19919180 A1
- DE 10212582 A1
- WO 02053426 A1
- WO 2004101336 A
- WO 9958381 A